# EUROPEAN PATENT SPECIFICATION

(11) **EP 1 298 369 B1**
(45) Date of publication and mention of the grant of the patent: **22.12.2004**
(21) Application number: 02425192.8
(22) Date of filing: 28.03.2002
(51) Int. Cl.: F16K 17/00

(54) **Safety plug for pressurised containers**
Sicherheitsverschluss für Druckbehälter
Bouchon de sécurité pour réservoir sous pression

(43) Date of publication of application: 02.04.2003
(73) Proprietor: Olab S.r.l., 25030 Torbole Casaglia (Brescia) (IT)
(72) Inventor: Bottura, Cesare, 25100 Brescia (IT); Marchini, Vito, 25010 Desenzano Del Garda (Brescia) (IT); Trapletti, Giuseppe, 25038 Rovato (Brescia) (IT)
(74) Representative: Long, Giorgio

(56) References cited:
- EP-A- 0 652 393
- EP-A- 0 744 566
- DE-C- 4 430 822
- DE-U- 20 113 631
- DE-U- 29 905 980

## Description

The present invention relates to a safety plug connectable to a pressurizable container, such as a boiler, a tank, a radiator, containers of liquids or gases in general, and the like.
Prior art safety plugs according to the preamble of claim 1 are known for instance from DE-U-2 99 05 980.

It is well known that, often for accidental reasons, the pressure of a working fluid, such as a vapour, a gas or a liquid, can rise, inside the container in which it is held, to elevated values in an uncontrollable manner without the user of the apparatus being aware of this.

This can happen with the boilers of a variety of electrical household appliances, such as professional-type clothes irons, or the radiators of the cooling systems of cars, and the like.

The plug of these pressurizable containers, in the most advanced types, is equipped with a relief valve and, sometimes, with a safety device.

The safety device, in particular, prevents the plug from being unscrewed from the pressurized container when the pressure of the working fluid exceeds a predetermined safety pressure, i.e. exceeds a pressure level that is dangerous to the user.

The safety pressure is chosen so as to be lower than a relief pressure, capable of activating the relief valve and allowing the working fluid to escape.

It is known, for example, a plug fitted with a threaded body that screws at one end onto the container of the working fluid and is internally hollow, so as to house an internal sliding piston.

Below the safety pressure, the piston engages with the threaded body and with the ribs of the hand knob of the plug, whereas when the pressure increases the piston rises, its engagement teeth sliding between the ribs of the knob until they disengage from the threaded body.

As a result, above the safety pressure, even if the knob is rotated, the threaded body cannot be unscrewed from the seat provided on the container.

One example of an embodiment of a safety valve of the above type is described in Italian Utility Model No. ITBS97U000071 belonging to OLAB s.r.l.

However, safety plugs produced in accordance with the prior art of the industry have the drawback that the threaded body sometimes unscrews from the seat of the pressurized container, even when the containers are above the safety pressure so that the safety device is active. This can happen particularly when the threaded body is not firmly screwed into its seat on the container.

A need is felt, therefore, for a safety plug which, even if the threaded body is only loosely screwed into the container seat, prevents this threaded body from being unscrewed when the pressure is above the safety pressure.

The problem addressed by the present invention is that of devising a safety plug whose structural and functional characteristics are such as to fulfil the abovementioned needs and at the same time overcome the drawbacks discussed with reference to the prior art.

This problem is solved with a safety plug in accordance with Claim 1.

Other characteristics and the advantages of the safety plug according to the present invention will be found in the description given below of a preferred embodiment thereof, provided by way of non-restrictive indication, with reference to the accompanying figures, in which:

Figure 1 is a partly sectioned perspective view of a safety plug comprising a hand knob and an engagement body in the down position;

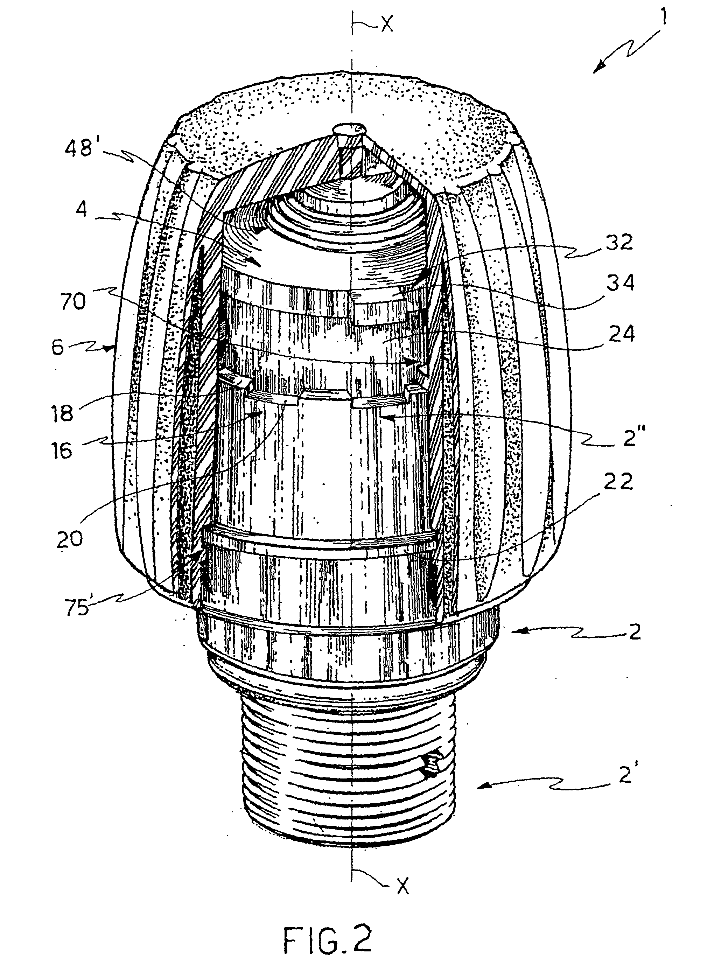

Figure 2 is a partly sectioned perspective view of the safety plug of Figure 1 equipped with the engagement body in the up position;

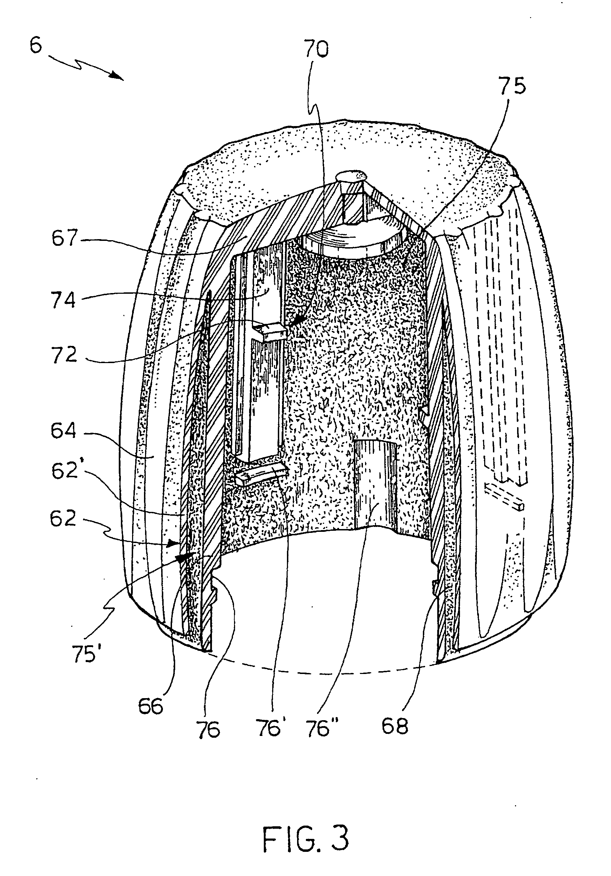

Figure 3 is a partly sectioned perspective view of the hand knob of Figure 1;

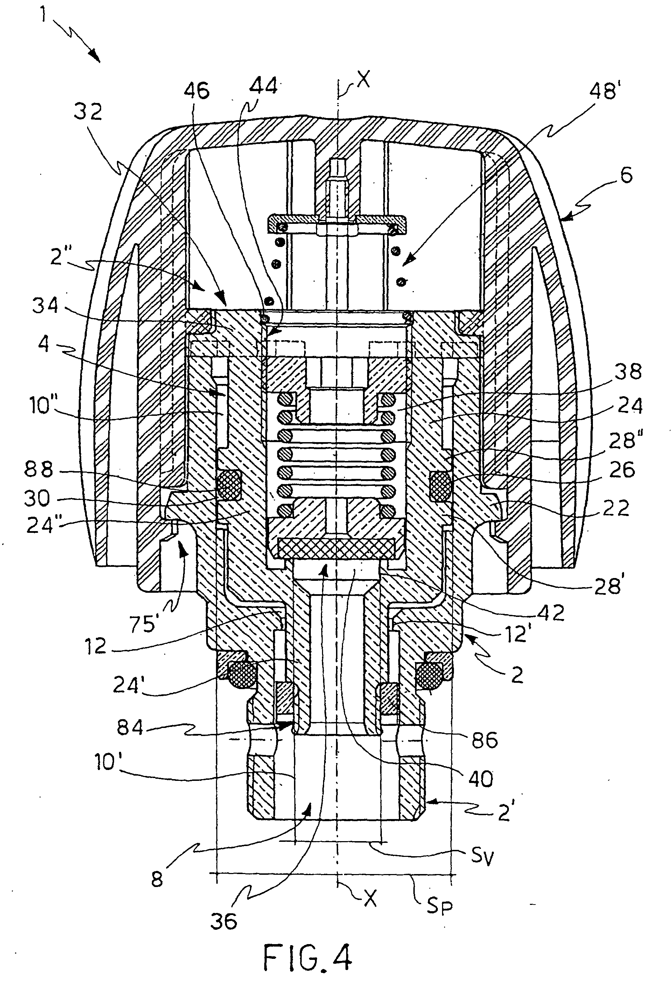

Figure 4 is a sectional view of the safety plug of Figure 1, with the engagement body in the down position;

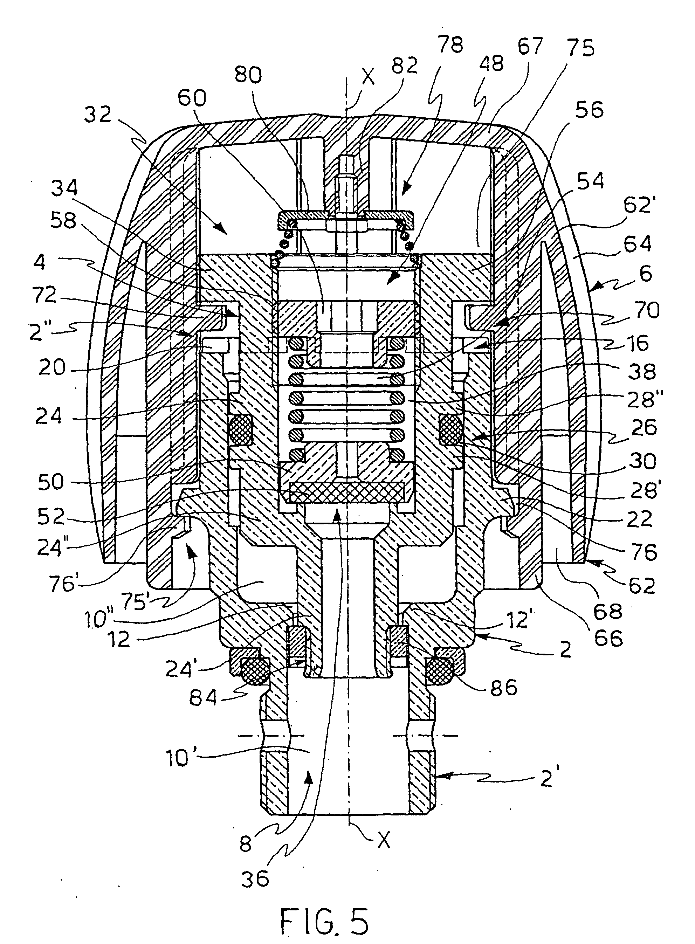

Figure 5 is a sectional view of the safety plug of Figure 2, with the engagement body in the up position;

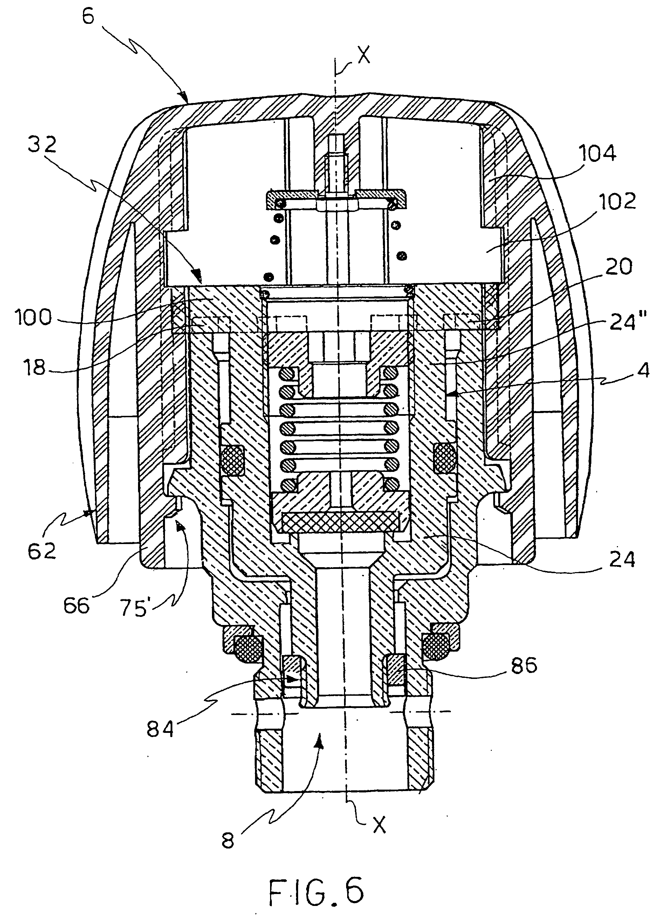

Figure 6 is a sectional view of an alternative embodiment of a safety plug, with an engagement body in the down position; and

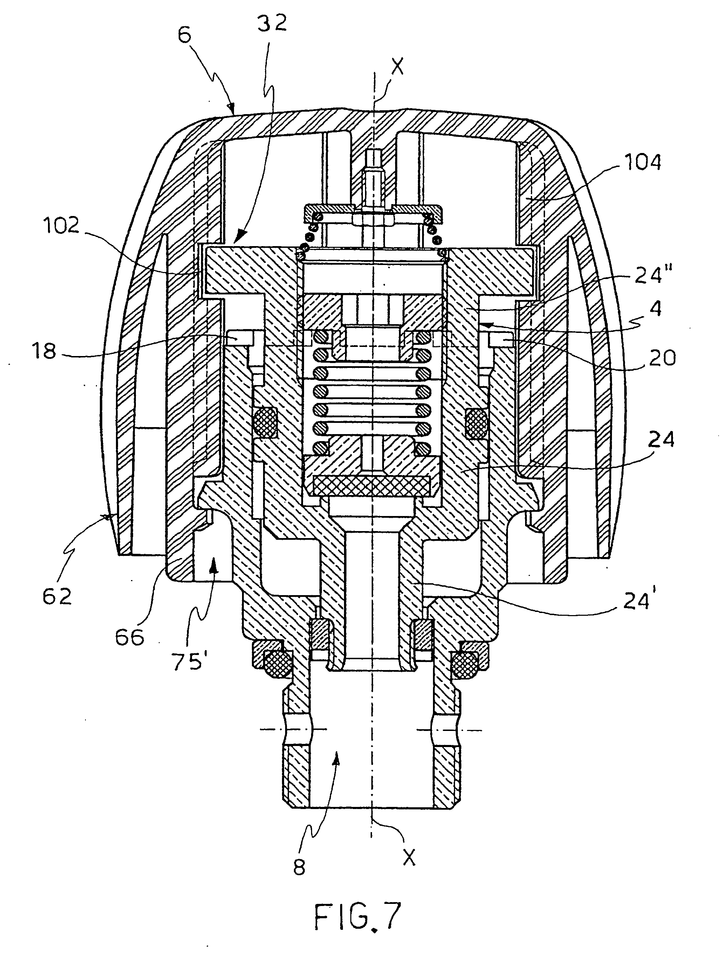

Figure 7 is a sectional view of the safety plug of Figure 6, with the engagement body in the up position.

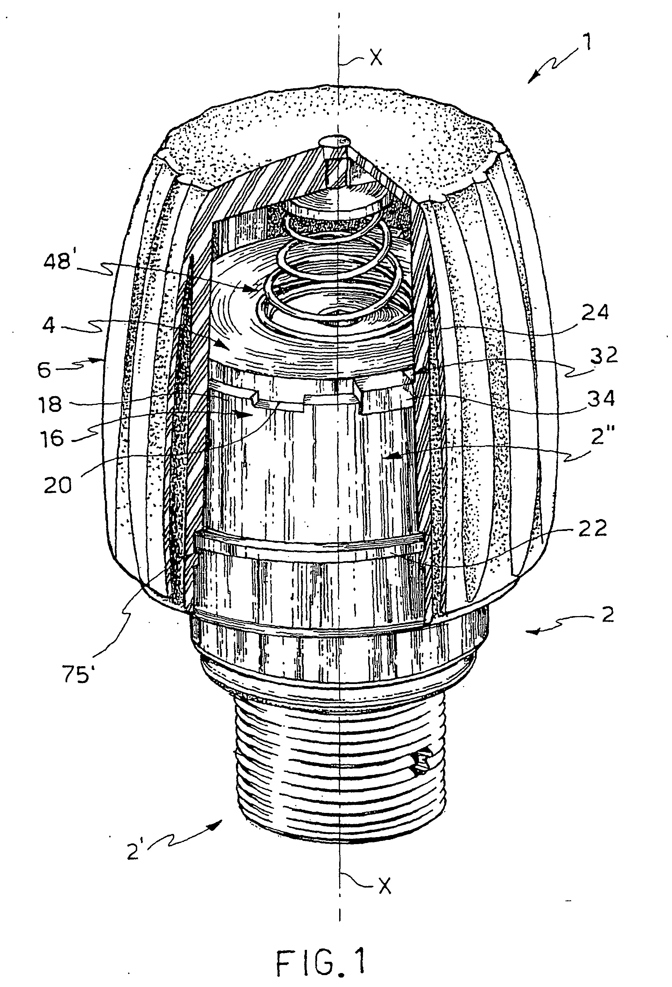

Referring to Figure 1, the number 1 denotes the whole of a plug which is formed around a central axis of symmetry X-X, that comprises a body 2, preferably threaded at a lower end 2', an engagement/disengagement body 4 and a hand knob 6 connected to the said body 2.

At its threaded end 2', the threaded body 2 can be screwed, in a fitted configuration, into a seat in a container of a working fluid (not shown).

The threaded body 2 is preferably internally hollow and tubular in shape, forming a cavity 8 of roughly cylindrical form about the central axis X-X.

In a preferred embodiment, the said cavity 8 of the threaded body 2 comprises at least two spaces in succession: an end space 10' near the threaded lower end 2' of the body 2, and a housing space 10", communicating with the end space 10' through an aperture 12 and extending upwards to an upper end 2" of the threaded body 2, the said upper end being remote from the lower threaded end 2'.

In the aperture 12 between the end space 10' and the housing space 10", the said end space 10' includes an annular stop 12' projecting radially into the said space 10'.

At the upper end 2" of the threaded body 2, the said threaded body is provided with mating engagement elements 16.

In a preferred embodiment, the said mating engagement elements take the form of an annular band that forms the terminal portion of the said hollow body 2 towards the upper end 2". This annular band is preferably shaped to generate a circumferential succession of engagement teeth 18 and engagement recesses 20 formed in an essentially axial direction.

In a preferred embodiment, on the outside of the threaded body 2 is an annular connecting edge 22 projecting from the outer surface of the said threaded body that forms mating elements connecting the body 2 to the knob 6.

The engagement/disengagement body 4, which includes pressure surfaces, is formed, in accordance with a preferred embodiment of the plug 1, by a piston 24 extending along the direction of the central axis X-X of the plug.

The said piston 24 preferably comprises in succession a first or anti-push-out portion 24' and a second or guiding and sealing portion 24". The said portions generally have different outside diameters, the guiding and sealing portion 24" having a larger outside diameter than the outside diameter of the anti-push-out portion 24'.

In accordance with one embodiment, the guiding and sealing portion 24" comprises sealing means 26, preferably comprising a succession of annular projections 28' and 28" separated axially by a sealing seat 30.

The engagement/disengagement body 4 also comprises mating elements 32.

In a preferred embodiment of the plug 1, the said mating elements comprise a succession of radially projecting mating projections 34 situated at the outermost end of the upper portion 24" of the piston 24. In this example there are four such mating projections 34.

In accordance with another embodiment, the piston 24 is internally hollow, having a through cavity formed preferably by the succession of a relief pressure indicating channel 36, preferably corresponding to the lower or anti-push-out portion 24' of the piston 24, and a housing space 38, preferably corresponding to the upper or guiding and sealing portion 24" of the said piston.

The relief pressure indicating channel 36 is in communication with the housing space via a calibrated aperture 40, bounded by an annular stop 42 that extends in an essentially axial direction and projects towards the housing space 34 of the piston 24.

The housing space 38 is identified by a cylindrical wall that possesses, in an end portion, a thread 44 remote from the relief pressure indicating channel 36 of the piston 24.

In a preferred embodiment, the said thread 44 terminates in a flared annular seat 46 for a first resilient element 48'.

The housing space 38 forms a housing for a relief valve 48, comprising a closure member 50 fitted with a seal 52, a second resilient element 54 and a preloading ring nut 56. The said preloading ring nut has an external thread 58 and a through relief hole 60, which is at least partly shaped to be able to take a workshop tool, such as a hexagon key, to allow the said ring nut 56 to be screwed in or out.

The threaded body 2 is connectable to the hand knob 6.

The knob 6 comprises an external handgrip 62 designed to enable the user to screw the plug 1 onto the seat of the container and/or unscrew it.

The said external handgrip preferably takes the form of a cap 62' with a plurality of individual ribs 64 on its outer surface.

The abovementioned cap represents only a preferred example of an embodiment of the handgrip, other embodiments being possible, such as, by way of example, a circumferential succession of outwardly-projecting radial ribs.

The handgrip 62 encloses a safety wall 66 that is preferably cylindrical and concentric with the said handgrip 62.

The handgrip 62 and the safety wall 66 converge, at an upper end portion 66' of the said safety wall 66, towards a blind end 67 that joins them together.

The handgrip 62 and the safety wall 66 are thermally isolated, preferably by a gap 68 between the said safety wall and the said handgrip.

In accordance with another embodiment, the safety wall is thermally isolated from the handgrip by a thermally insulating material of which the safety wall or the handgrip are made.

The knob 6 also includes mating elements 70 for engagement of the knob 6.

The said mating engagement elements 70 are preferably represented by a circumferential succession of pegs 72 projecting from reinforcing ribs 74 on the inside of the safety wall 66 towards the central axis X-X of the plug 1. In the example described, there are two such pegs 72 positioned axially with respect to the safety wall 66 in such a way that a sliding space 75 is formed between the said pegs and the blind end 67 of the hand knob 6

In one embodiment, the hand knob 6 comprises connecting means 75' connecting the knob 6 to the body 2 of the plug 1.

The said connecting means 75' of the knob 6 preferably comprise an annular connecting space 76 formed on the inside of the safety wall 66. In a preferred embodiment, the said connecting space 76 is defined by a circumferential succession of stop elements 76'. In the illustrative knob 6 described, there are four such stop elements 76'.

In a preferred embodiment, recessed passageways 76" are formed between the stop elements 76' of the safety wall 66 of the knob 6.

The plug 1, in another embodiment, possesses means 78 for preloading the safety device. These comprise a disc 80 attached to a protuberance 82 projecting axially from the blind end 67 of the knob 6 and central with respect to the said blind end.

In the assembled configuration of the safety plug 1, the piston 24 is housed in the cavity 8 of the threaded body 2, in such a way that the lower or anti-push-out portion 24' of the piston 24 is inserted with play in the end space 10' of the cavity 8 of the threaded body 2, passing through the aperture 12 between the said end space 10' and the housing space 10". The upper guiding and sealing portion 24" of the piston 24 is housed in the housing space 10" of the said threaded body.

The lower anti-push-out portion 24' of the piston 24 has a threaded section 84 carrying a stop nut 86. Below this nut, the anti-push-out portion 24' of the piston 24 is caulked to prevent the possibility of the stop nut 86 from unscrewing and coming off.

The guiding and sealing portion 24" of the piston 24 possesses, in the sealing seat 30 defined by the external annular projections 28' and 28", a resilient ring 88 designed to be pushed into the said sealing seat 30 and having nominal dimensions such as to provide sealing contact with the inside surface of the housing space 10" of the threaded body 2.

Consequently, a disc of diameter equal to the diameter of the housing space 10" of the body 2 forms the pressurizable surface area Sp of the safety device of the plug 1. In particular, the said pressurizable surface area Sp can be located at the resilient ring 88 housed in the seat 30 of the piston 24.

The stop nut 86 has nominal outside dimensions such as to fit into the end space 10' of the body 2 with radial clearance. Radial clearance is also provided between the lower anti-push-out portion 24' of the piston 24 and the aperture 12 of the body 2, and between the guiding and sealing portion 24" of the piston 24 and the housing space 10" of the body 2.

The said radial clearances create, by their succession, an annular safety pressure warning channel 90 which indicates the pressure of the working fluid present inside the pressurizable container at the pressurizable surface area Sp of the safety device at the location of the resilient ring 88.

The housing space 38 of the piston 24 forms a housing for the relief valve 48.

In particular, the closure member 50 rests on the annular stop 42 via the seal 52 fitted inside it. The said closure member is held in position against the annular stop 42 by the second resilient element 54, which is preloaded by the preloading ring nut 56 screwed into the housing space 38 of the piston 24.

It is clear that the position assumed by the preloading ring nut 56 determines the preloading force of the second resilient element 54 and, therefore, the force pressing the closure member 50 onto the annular stop 42.

The surface of the seal 52 which is directed towards the relief pressure indicating channel 36 of the piston 24 forms the pressurizable surface area Sv of the safety valve. The aperture 40, therefore, positioned between the said channel and the housing space 38 of the piston 24, is an accurately sized aperture.

The closure member 50 is mounted with radial clearance in the housing space 38, while the preloading ring nut 56 contains the relief hole 60. Consequently the radial clearance of the closure member 50, the portion of the housing space 38 between the said closure member and the preloading ring nut 56 and the relief hole 60 of the said ring nut create a fluid expulsion channel for the relief valve 48. The said expulsion channel is in communication with the external environment via an expulsion channel inside the hand knob 6, provided by the sliding space 75 of the said hand knob and the radial clearance between the safety wall 66 of the said knob and the outer surface of the threaded body.

When the plug 1 is in the assembled configuration, the hand knob 6 sits on top of the threaded body 2.

The said knob is connected axially to the threaded body 2 by means of the annular edge 22 of the body 2 sitting in the annular connecting space 76 of the knob 6.

The disc 80 integral with the knob 6 acts as a support plate for the first resilient element 48', one end of which is engaged with the said disc and the other housed in the seat 46 of the piston 24.

The preloading means 78 of the safety device, which comprise the disc 80, the first resilient element 48' and the seat 46 of the piston for the said first resilient element, result in a preloading force acting on the piston 24 and, at the same time, a force equal and opposite to the latter acting on the hand knob 6, stabilizing the position of the latter with respect to the threaded body 2 by means of the stop between the stop elements 76' defining the annular connecting space 76 and the annular edge 22 of the threaded body 2.

In particular, the annular edge 22 of the threaded body 2 has a diameter such that it extends, when the knob 6 is assembled on the threaded body 2, almost into contact with the inside surface of the safety wall 66 of the knob 6. The recessed passageways 76" formed in the safety wall 66 of the knob 6 therefore define, when the knob 6 is assembled on the threaded body 2, passages of communication between the internal space of the said knob and the external environment.

Moreover, the positioning of the knob 6 with respect to the threaded body 2 is such that the pegs 72 of the said knob are situated with their lower surface above the upper surface of the engagement teeth 18 of the threaded body. In this way there is no rotational interference between the knob 6 and the said threaded body 2.

In a first configuration of rest for the safety plug 1, the pressure of the working fluid inside the container is below a safety pressure.

The piston 24 is in a down position inside the cavity 8 of the threaded body 2, with the engagement projections 34 sitting in the engagement recesses 20 of the threaded body 2.

The piston is held in this position not only by its own weight (which applies only to cases in which the force of gravity acting on the piston pulls the said piston against the engagement recesses 20), but also by the preloading force exerted by the first resilient element 48'.

In the down position, the engagement elements 32 of the piston 24 engage with the mating engagement elements 16 of the threaded body 2 and with the mating engagement elements 70 of the knob 6.

As described earlier, it is preferable for the said engagement elements 32 of the piston 24 to be formed by the engagement projections 34, the mating engagement elements 16 of the threaded body 2 by the teeth 18, and the mating engagement elements 70 of the knob 6 by the pegs 72.

The said engagement projections 34 of the piston 24, in the said down position of the piston 24, fitting in the engagement recesses 20 between the teeth 18 of the threaded body 2, project, by virtue of their axial thickness, above the said engagement teeth 18 of the body 2.

At the same time, with the knob 6 positioned with respect to the threaded body 2 in the manner described above, the pegs 72 of the said knob interfere rotationally with the said engagement projections 34 of the piston 24.

In the rest position of the piston 24, rotation of the knob 24 causes, owing to the interference of the latter with the engagement projections 34 of the piston 24, rotation of the piston 24 and, therefore, because of the engagement between the same engagement projections 34 of the piston 24 and the engagement teeth 18 of the threaded body 2, rotation of the threaded body 2. It is therefore possible to screw the safety plug 1 into or out of the seat provided in the container of working fluid.

When the knob 6 is assembled on the body 2, the contact between the said body 2 and the said knob 6 sitting on top of it is limited to the contact between the stop elements 76' of the safety wall 66 and the annular edge 22 of the said body 2.

The part of the hand knob 6 which is gripped by the user is the handgrip 62, which is attached to the safety wall 66 by the blind end 67.

The body 2, which is generally hot because of the contact with the container of working fluid, to which it is usually screwed, transfers heat to the knob-6 through a limited contact between the stop elements 76' of the said knob and the annular edge 22 of the said body 2.

In addition, the said body 2 is enclosed within the safety wall 66, which is attached to the handgrip 62 only by the blind end 67, and the said handgrip 62 has no contact with the safety wall 66 except via the said blind end 67 because of the presence of the gap 68.

What is more, when the user grasps the knob 6, he is touching the ribs 64 formed on the outside of the said handgrip 62, which also limits the contact between the user and the handgrip 62.

The preloading means 78 not only keep the piston 24 pressed against the body 2 of the plug 1 by means of the resilient action of the first resilient element 48', but also, by means of an equal and opposite action, support the knob 6 in position with respect to the said body 2.

In particular, the said preloading means 78 keep the stop elements 76' of the annular space 76 pressed against the annular edge 22 of the body 2.

When the pressure of the working fluid in the container is equal to or above a safety pressure, the plug 1 goes from the rest configuration to a safety configuration.

The pressure of the working fluid, if equal to or greater than the safety pressure, which is transmitted to the pressurizable surface area Sp of the safety device is sufficient to generate a force that will lift the piston 24, arresting it in an up position determined by the position of the stop nut 86 on the lower anti-push-out portion 24' of the piston 24, which encounters the annular stop 12' next to the aperture 12 of the cavity 8 of the threaded body 2.

In the up position of the piston 24, the engagement projections 34 are positioned axially in such a way that their lower surface is above the upper surface of the pegs 72 of the knob 6, with the result that there is no rotational interference between the piston 24 and the threaded body 2, or between the piston 24 and the knob 6.

In the safety configuration, therefore, rotation of the knob corresponds to the pegs 72 of the knob 6 moving over the tops of the engagement teeth 18 of the threaded body 2 and underneath the engagement projections 34 of the piston 24, with no interference.

In other words, in the safety configuration of the plug 1, turning the knob has no effect on the piston or on the threaded body, making it impossible to screw the said threaded body 2 onto or off the seat provided on the container.

In particular, turning the knob has no effect on the piston and, therefore, there is no engagement between the piston and the threaded body due to the resilient ring 88.

If the pressure of the working fluid equals a predetermined relief pressure, the plug 1 assumes a relief configuration.

For working fluid pressures less than the relief pressure, the relief valve 48 maintains a closed configuration, shutting off the expulsion path of the working fluid.

In its closed configuration, the seal 52 housed in the closure member 50 of the relief valve 48 is pressed against the annular stop 42 of the housing space 38 of the piston 24.

The seal 52 is kept in this position by the preloading force of the second resilient element 54, which is preloaded by the preloading ring nut 56.

When the pressure of the working fluid is equal to or above the safety pressure, but below the relief pressure, the piston 24 is raised, but the relief valve remains in its closed configuration.

When the pressure of the working fluid is equal to the relief pressure, the relief valve 48 moves into an open configuration in which the seal is lifted off the annular seat 42 by the force resulting from the relief pressure, which acts, through the relief pressure indicating channel 36, on the seal 52 in the accurately-sized aperture 42, that is on the pressurizable surface area Sv.

In the open configuration of the relief valve 48, the working fluid escapes into the external environment via the safety plug.

In particular, in the relief configuration of the plug 1, the pressurized working fluid escapes from the piston 24 through the expulsion channel, into the sliding space 75 of the knob 6 and, from the said sliding space 75 of the knob 6, escapes to the outside, striking the outer surface of the threaded body 2 and the inner surface of the safety wall 66 of the knob 6, and passes into the external environment through the recessed passageways 76" of the safety wall 66.

Since the said pressurized working fluid is generally hot, when it strikes the safety wall 66 of the knob 6 it heats the said wall.

The handgrip 62 of the knob 6 is thermally isolated from the safety wall 66 of the said knob, preferably by the gap 68 between the safety wall 66 and the handgrip 62, so that accidental contact by the user with the knob 6, even when the fluid is at the relief pressure, is not made dangerous by overheating of the said handgrip 62.

There now follows a description of an alternative embodiment of a safety plug, with particular reference to those parts which differentiate this embodiment from that described above.

The engagement/disengagement body 4, which is preferably a piston 24, comprises engagement elements 32 which take the form of a succession of engagement projections 100 projecting radially from the piston 24 at the terminal end of the upper portion 24" of the said piston.

The engagement projections 100 have a radial length such as to project, when the piston 24 is fitted inside the threaded body 2, from the said threaded body.

The handgrip 62 of the knob 6 encloses a safety wall 66, which is preferably cylindrical and concentric with the handgrip 62.

The said safety wall 66 contains internally a sliding space 102 which interrupts the continuity of reinforcing ribs 104 formed on the inside of the knob 6.

In the rest configuration of the safety plug 1, the piston 24 is in a down position inside the cavity 8 of the threaded body 2, with the engagement projections 100 at the bottom of the engagement recesses 20 of the threaded body, in rotational interference with the engagement teeth 18 of the threaded body 2.

At the same time, because the said engagement projections 100 of the piston 24 project radially from the threaded body 2, they extend between the reinforcing ribs 104 of the knob 6 and interfere rotationally with the said knob.

In the rest position of the piston 24, turning the knob 6 has the effect, due to interference of its reinforcing ribs 104 with the engagement projections 100 of the piston 24, of turning the piston 24 and, therefore, owing to the engagement between the same engagement projections 100 of the piston 24 and the engagement teeth 18 of the threaded body 2, of also turning the threaded body 2. It is therefore possible to screw the safety plug 1 onto or off the seat provided in the container of working fluid.

When the piston 24 is in the up position, i.e. when the plug 1 is in the safety configuration, the engagement projections 100 are positioned axially so as to sit in the sliding space 102 of the knob, and, by virtue of the travel of the piston, in such a way that the lower surface of the engagement projections 100 are above the upper surface of the engagement teeth 18 of the piston. There is therefore no rotational interference between the piston 24 and the threaded body 2, or between the piston 24 and the knob 6.

In the safety configuration, therefore, when the knob is turned, those parts of the engagement projections 100 which project from the threaded body 2 move within the sliding space 102 of the knob 6, so there is no effect on the piston or on the threaded body.

Unusually, even if the threaded body is screwed loosely onto the seat of the container and the pressure of the working fluid is equal to or above a predetermined safety pressure, the safety plug according to the present invention prevents this threaded body from being unscrewed from the seat on the container to which it attaches.

In particular, the plug according to the invention prevents this threaded body from being unscrewed from the seat provided on the container by preventing the piston from being turned and, therefore, preventing frictional forces between the piston and the threaded body from unscrewing the said body if it has been screwed on loosely.

In accordance with another advantageous aspect, the safety plug according to the invention has the advantage of being able to be tailored to different applications to suit the safety pressure and/or relief pressure.

In other words, the said plug can be tailored to different safety or relief pressures according to the use for which it is intended. In particular, by making appropriate adjustments to the preloading means acting on the piston, the safety device can be adjusted, and, by adjusting the preloading ring nut of the second resilient element, it is possible to adjust the relief valve.

Furthermore, the plug according to the invention is suitable for use with a knob capable of preventing burns or other injury to a user who may grasp the said knob when the working fluid is hot.

In other words, the said plug operates advantageously with a knob provided with a safety wall inside the handgrip and connected to the body by limited contact surfaces formed in this safety wall. Moreover, the said safety wall is joined to the handgrip only at the blind end of the said knob, the rest of it being separated from the knob by the gap.

Finally, in accordance with another advantageous aspect of the safety plug, the said plug has a compact structure, incorporating in a restricted number of components the functions of a conventional plug, a safety device and a relief valve.

Clearly, a person skilled in the art will be able to make numerous modifications and alterations to the safety plug described above and illustrated with reference to the figures, in order to fulfil particular and specific requirements, all such modifications and alterations lying within the scope of protection of the invention as defined by the following claims.

## Claims

1. Safety plug (1) connectable to a pressurizable container having defined central axis (X-X), comprising:
- a body (2) threaded at a first threaded end (2') connectable to the said container;
- a hand knob (6) for screwing the threaded body (2) onto or off the container and functionally connectable to the said threaded body (2); and
- an engagement/disengagement body (4) with engagement elements (32), which body can slide inside the said threaded body (2) between a down position, in which the said engagement elements engage with mating engagement elements (70) on the said knob (6) and with mating engagement elements (16) on the said threaded body (2) so as to couple the engagement/disengagement body (4) rotationally with the knob (6) and the threaded body (2), and an up position, in which the engagement elements (32) of the engagement/disengagement body (4) are disengaged from the mating engagement elements (70) of the knob (6), the said plug being **characterized in that** in the up position, said engagement elements (32) are also disengaged from the mating engagement elements (16) of the said threaded body (2).

2. Safety plug according to Claim 1, in which the said hand knob (6) comprises a sliding space (75) that houses the said engagement elements (32) of the engagement/disengagement body (4) in its up position so that there is no rotational interference between the said engagement elements (32) and the mating engagement elements (70) of the knob (6).

3. Safety plug according to Claim 1 or 2, in which the said mating engagement elements (70) of the hand knob (6) take the form of at least one peg (72) projecting from a safety wall (66) of the said knob (6) towards the central axis (X-X) of the plug (1).

4. Safety plug according to Claim 3, in which the said sliding space (75) of the knob (6) is defined by the said safety wall (66) and extends above the said peg (72) as far as a blind end (67) of the said knob.

5. Safety plug according to any one of the preceding claims, in which the mating elements (32) of the engagement/disengagement body (4) comprise at least one engagement projection (34) projecting from the said engagement/disengagement body (4).

6. Safety plug according to Claim 5, in which the said engagement projection (34) projects radially from the said engagement/disengagement body (4).

7. Safety plug according to any one of the preceding claims, in which the said mating engagement elements (16) of the threaded body (2) take the form of at least one engagement tooth (18) that extends in an essentially axial direction projecting from an upper end (2") of the said threaded body (2).

8. Safety plug according to Claim 7, in which the said at least one engagement tooth (18) is an annular succession of engagement teeth (18).

9. Safety plug according to Claim 8, in which the said engagement teeth (18) are spaced out angularly by engagement recesses (20).

10. Safety plug according to Claim 3 and 9, in which the said engagement projection (34) of the engagement/disengagement body (4) is partially housed, in its down position, in the corresponding engagement recess (20) of the threaded body (2) and projects above the engagement teeth (18) of the threaded body (2) in such a way as to interfere rotationally with the said pegs (72) of the hand knob (6).

11. Safety plug according to any one of the preceding claims, in which the engagement/disengagement body (4) is held in the down position by resilient preloading means.

12. Safety plug according to Claim 11, in which the said preloading means comprise a first preloaded resilient element between the said engagement/disengagement body (4) and a flat stop element.

13. Safety plug according to Claim 12, in which the said flat stop element is a disc (80).

14. Safety plug according to any one of the preceding claims, in which the engagement/disengagement body (4) contains an internal housing space (38).

15. Safety plug according to Claim 14, in which the said housing space (38) houses a relief valve (48).

16. Safety plug according to Claim 15, in which the said relief valve (48) comprises a closure member (50), a seal (52), a second resilient element (54) and a preloading ring nut (56).

17. Safety plug according to Claim 16, in which the said preloading ring nut (56) contains a through relief hole (60).

18. Safety plug according to one of Claims 15 to 17, in which the said housing space (38) of the engagement/disengagement body (4) forms one section of a channel through which the working fluid is expelled when the relief valve (48) is open.

19. Safety plug according to any one of the preceding claims, in which the said engagement/disengagement body (4) comprises means for arresting the rising of the said body.

20. Safety plug according to Claim 19, in which the said arresting means comprise a stop nut (86) which, when the engagement/disengagement body (4) is in the up position, meets an annular stop (12') on the threaded body (2).

21. Safety plug according to Claim 1 or 2, in which the said mating engagement elements (70) of the hand knob (6) take the form of at least one reinforcing rib (104) which extends from a safety wall (66) of the knob (6) and projects towards the central axis (X-X) of the plug (1), extending axially following the profile of the said safety wall.

22. Safety plug according to Claim 21, in which the said reinforcing ribs (104) of the knob (6) include interruptions in their axial continuity (102).

23. Safety plug according to Claim 22, in which the said sliding space (102) of the knob (6) is circumferentially identified by adjacent axial portions of the said interrupted reinforcing ribs (104).

24. Safety plug according to any one of the preceding claims, in which the said hand knob comprises an external handgrip (62) designed to be grasped to enable the said plug to be screwed onto or off the container.

25. Safety plug according to Claim 24, in which the said hand knob also includes a safety wall (66) that is at least partially internal to the handgrip (62) and largely thermally isolated from the latter.

26. Safety plug according to Claim 24 or 25, in which the said safety wall (66) is largely thermally isolated from the handgrip (62) by a gap (68) between the said safety wall (66) and the said handgrip (62).

27. Safety plug according to one of Claims 24 to 26, in which the said safety wall (66) and the said handgrip (62) join at the top.

28. Safety plug according to Claim 27, in which the said safety wall (66) and the said handgrip (62) join at a blind end (67).

29. Safety plug according to any one of Claims 24 to 28, in which the said handgrip (62) comprises a cap (62').

30. Safety plug according to Claim 29, in which the said cap (62') is provided with a plurality of external ribs (64).

31. Safety plug according to Claim 30, in which the said ribs (64) reduce the contact area between the user and the handgrip (62).

32. Safety plug according to Claim 30 or 31, in which the said ribs (64) are ribs with an anti-slip function.

33. Safety plug according to any one of Claims 24 to 32, in which the said knob comprises connecting means for connecting the knob to the body (2) of the plug (1).

34. Safety plug according to Claim 33, in which the said connecting means comprise an annular space (76) designed to house mating elements for connecting the body (2) to the knob (6).

35. Safety plug according to Claim 34, in which the said annular space (76) is defined by a circumferential succession of stop elements (76').

36. Safety plug according to Claim 35, in which there are four of the said stop elements (76').

37. Safety plug according to one of Claims 34 to 36, in which the said mating connecting elements comprise an annular edge (22).

38. Safety plug according to Claim 37, in which, when the knob (6) is connected to the body (2), the stop elements (76') of the annular space (76) are in contact with the annular edge (22) of the body (2).

39. Safety plug according to Claim 38, in which preloading means (78) keep the stop elements (76') of the annular space (76) in contact against the annular edge (22) of the body (2).

40. Safety plug according to Claim 39, in which the said preloading means comprise a first resilient element (48') acting on a disc (80) integral with the knob (6).

41. Safety plug according to any one of Claims 25 to 40, in which the said safety wall (66) is made of a thermally isolating material forming an internal sheath for the said hand grip (62) to isolate it thermally.

42. Safety plug according to any one of Claims 25 to 41, in which the said handgrip (62) is made of a thermally isolating material and forms an external sheath for the said safety wall (66) to isolate it thermally.

43. Safety plug according to any one of Claims 25 to 42, also comprising recessed passageways (76") in the safety wall (66).

## Patentansprüche

1. Sicherheitsverschluß (1), der mit einem mit Druck beaufschlagbarem Behälter verbindbar ist und eine Zentralachse (X-X) definiert, aufweisend:
einen Körper (2), der an einem ersten Gewindeende (2') mit einen Gewinde versehen ist, welches mit dem Behälter verbindbar ist;
einem Handknauf (6) zum Auf- und Abschrauben des Gewindekörpers (2) auf den Behälter und von diesem Behälter und wirkverbindbar mit dem Gewindekörper (2); und
einem Eingriffs/Löse-Körper (4) mit Eingriffselementen (32), der innerhalb des Gewindekörpers (2) zwischen einer Abwärtsposition, bei der die Eingriffselemente sich in Eingriff befinden mit aneinanderpassenden Eingriffselementen bzw. Gegeneingriffselementen (70) an dem Knauf (6) und mit aneinanderpassenden Eingriffselementen bzw. Gegeneingriffselementen (16) an dem Gewindekörper (2), um den Eingriffs/Löse-Körper (4) drehend mit dem Knauf (6) und dem Gewindekörper (2) zu koppeln, und einer Aufwärtsposition innerhalb des Gewindekörpers (2) gleiten kann, bei der die Eingriffselemente (32) des Eingriffs/Löse-Körpers (4) von den Gegeneingriffselementen (70) des Knaufs (6) außer Eingriff gebracht sind, wobei der Verschluß **dadurch gekennzeichnet ist, daß** bei der Aufwärtsposition die Eingriffselemente (32) auch von den Gegeneingriffselementen (16) des Gewindekörpers (2) außer Eingriff gebracht sind.

2. Sicherheitsverschluß nach Anspruch 1, wobei der Handknauf (6) einen Gleitraum (75) aufweist, in dem die Eingriffselemente (32) des Eingriffs/Löse-Körpers (4) bei ihrer Aufwärtsposition untergebracht sind, so daß es keine Rotationsstörung zwischen den Eingriffselementen (32) und den Gegeneingriffselementen (70) des Knaufs (6) gibt.

3. Sicherheitsverschluß nach Anspruch 1 oder 2, wobei die Gegeneingriffselemente (70) des Handknaufs (6) die Gestalt zumindest eines Zapfens (72) annehmen, der von einer Sicherheitswand (66) des Knaufs (6) in Richtung auf die Zentralachse (X-X) des Verschlusses (1) vorsteht.

4. Sicherheitsverschluß nach Anspruch 3, wobei der Gleitraum (75) des Knaufs (6) durch die Sicherheitswand (66) definiert ist und sich über den Zapfen (72) hinweg erstreckt soweit wie ein Blindende (67) des Knaufs.

5. Sicherheitsverschluß nach einem der vorangegangenen Ansprüche, wobei die Eingriffselemente (32) des Eingriffs/Löse-Körpers (4) zumindest einen Eingriffsvorsprung (34) aufweisen, der von dem Eingriffs/Löse-Körper (4) vorsteht.

6. Sicherheitsverschluß nach Anspruch 5, wobei der Eingriffsvorsprung (34) radial von dem Eingriffs/Löse-Körper (4) vorsteht.

7. Sicherheitsverschluß nach einem der vorangegangenen Ansprüche, wobei die Gegeneingriffselemente (16) des Gewindekörpers (2) die Gestalt zumindest eines Eingriffszahns (18) annehmen, der sich im wesentlichen in axialer Richtung erstreckt, und von einem oberen Ende (2'') des Gewindekörpers (2) vorsteht.

8. Sicherheitsverschluß nach Anspruch 7, wobei der zumindest eine Eingriffszahn (18) eine ringförmige Verlängerung der Eingriffszähne (18) ist.

9. Sicherheitsverschluß nach Anspruch 8, wobei die Eingriffszähne (18) durch Eingriffsvertiefungen (20) bezüglich der Winkellage beabstandet sind.

10. Sicherheitsverschluß nach Anspruch 3 und 9, wobei der Eingriffsvorsprung (34) des Eingriffs/Löse-Körpers (4) teilweise bei der Abwärtsposition in der übereinstimmenden Eingriffsvertiefung (20) des Gewindekörpers (2) untergebracht ist und über die Eingriffszähne (18) des Gewindekörpers (2) hinaus auf eine derartige Weise vorsteht, daß er eine Rotationsstörung mit den Zapfen (72) des Handknaufs (6) hervorruft.

11. Sicherheitsverschluß nach einem der vorangegangenen Ansprüche, wobei der Eingriffs/Löse-Körper (4) in der Abwärtsposition gehalten wird durch eine elastische Vorspanneinrichtung.

12. Sicherheitsverschluß nach Anspruch 11, wobei die Vorspanneinrichtung ein erstes elastisches Vorspannelement zwischen dem Eingriffs/Löse-Körper (4) und einem flachen Anschlagelement aufweist.

13. Sicherheitsverschluß nach Anspruch 12, wobei das flache Anschlagelement eine Scheibe (80) ist.

14. Sicherheitsverschluß nach einem der vorangegangenen Ansprüche, wobei der Eingriffs/Löse-Körper (4) einen internen Gehäuseraum (38) enthält.

15. Sicherheitsverschluß nach Anspruch 14, wobei der Gehäuseraum (38) ein Überdruckventil bzw. Abblaseventil (48) aufnimmt.

16. Sicherheitsverschluß nach Anspruch 15, wobei das Überdruckventil (48) ein Schließelement (50), eine Dichtung (52), ein zweites elastisches Element (54) und eine Vorspannringmutter (56) aufweist.

17. Sicherheitsverschluß nach Anspruch 16, wobei die Vorspannringmutter (56) eine Durchgangsabblasöffnung (60) enthält.

18. Sicherheitsverschluß nach einem der Ansprüche 15 bis 17, wobei der Gehäuseraum (38) des Eingriffs/Löse-Körpers (4) einen Bereich eines Kanals bildet, durch den das Betriebsfluid abgegeben wird, wenn das Überdruckventil (48) offen ist.

19. Sicherheitsverschluß nach einem der vorangegangenen Ansprüche, wobei der Eingriffs/Löse-Körper (4) eine Einrichtung aufweist zum Anhalten des Ansteigens des Körpers.

20. Sicherheitsverschluß nach Anspruch 19, wobei die Anhalteeinrichtung eine Anschlagmutter (86) aufweist, die auf einen ringförmigen Anschlag (12') an dem Gewindekörper (2) trifft, wenn der Eingriffs/Löse-Körper (4) sich in der Aufwärtsposition befindet.

21. Sicherheitsverschluß nach Anspruch 1 oder 2, wobei die Gegeneingriffselemente (70) des Handknaufs (6) die Gestalt zumindest einer Verstärkungsrippe (104) annehmen, die sich von einer Sicherheitswand (66) des Knaufs (6) erstreckt und in Richtung auf die Zentralachse (X-X) des Verschlusses (1) vorsteht, wobei sie sich axial erstreckt und dem Profil der Sicherheitswand folgt.

22. Sicherheitsverschluß nach Anspruch 21, wobei die Verstärkungsrippen (104) des Knaufs (6) Unterbrechungen in ihrer axialen Kontinuität (102) aufweisen.

23. Sicherheitsverschluß nach Anspruch 22, wobei der Gleitraum (102) des Knaufs (6) in der Umfangsrichtung durch benachbarte axiale Abschnitte der unterbrochenen Verstärkungsrippen (104) identifiziert wird.

24. Sicherheitsverschluß nach einem der vorangegangenen Ansprüche, wobei der Handknauf einen externen Handgriff (62) aufweist, der gestaltet ist, um gegriffen zu werden zum Ermöglichen des Aufschraubens oder Abschraubens des Verschlusses von und auf den Behälter.

25. Sicherheitsverschluß nach Anspruch 24, wobei der Handknauf auch eine Sicherheitswand (66) umfaßt, die zumindest teilweise intern an dem Handgriff (62) angeordnet ist und von dem letztgenannten stark thermisch isoliert ist.

26. Sicherheitsverschluß nach Anspruch 24 oder 25, wobei die Sicherheitswand (66) stark thermisch isoliert ist von dem Handgriff (62) durch einen Spalt (68) zwischen der Sicherheitswand (66) und dem Handgriff (62).

27. Sicherheitsverschluß nach einem der Ansprüche 24 bis 26, wobei die Sicherheitswand (66) und der Handgriff (62) an der Oberseite verbunden sind.

28. Sicherheitsverschluß nach Anspruch 27, wobei die Sicherheitswand (66) und der Handgriff (62) bei einem blinden Ende (67) verbunden sind.

29. Sicherheitsverschluß nach einem der Ansprüche 24 bis 28, wobei der Handgriff (62) eine Kappe (62') aufweist.

30. Sicherheitsverschluß nach Anspruch 29, wobei die Kappe (62') mit einer Vielzahl an externen Rippen (64) versehen ist.

31. Sicherheitsverschluß nach Anspruch 30, wobei die Rippen (64) den Kontaktbereich zwischen dem Anwender und dem Handgriff (62) vermindern.

32. Sicherheitsverschluß nach Anspruch 30 oder 31, wobei die Rippen (64) Rippen mit einer Antischlupffunktion sind.

33. Sicherheitsverschluß nach einem der Ansprüche 24 bis 32, wobei der Knauf eine Verbindungseinrichtung zum Verbinden des Knaufs mit dem Körper (2) des Verschlusses (1) aufweist.

34. Sicherheitsverschluß nach Anspruch 33, wobei die Verbindungseinrichtung einen ringförmigen Raum (76) aufweist, der gestaltet ist, um Gegenelemente zum Verbinden des Körpers (2) mit dem Knauf (6) aufzunehmen.

35. Sicherheitsverschluß nach Anspruch 34, wobei der ringförmige Raum (76) durch eine Umfangsfolge von Anschlagelementen (76') definiert ist.

36. Sicherheitsverschluß nach Anspruch 35, wobei es vier der Anschlagelemente (76') gibt.

37. Sicherheitsverschluß nach einem der Ansprüche 34 bis 36, wobei die Gegenverbindungselemente eine ringförmige Kante (22) aufweisen.

38. Sicherheitsverschluß nach Anspruch 37, wobei die Anschlagelemente (76') des ringförmigen Raums (76) sich in Kontakt befinden mit der ringförmigen Kante (22) des Körpers (2), wenn der Knauf (6) mit dem Körper (2) verbunden ist.

39. Sicherheitsverschluß nach Anspruch 38, wobei die Vorspanneinrichtung (78) die Anschlagelemente (76') des ringförmigen Raums (76) in Kontakt mit der ringförmigen Kante (22) des Körpers (2) hält.

40. Sicherheitsverschluß nach Anspruch 39, wobei die Vorspanneinrichtung ein erstes elastisches Element (48') aufweist, das auf eine Scheibe (80) wirkt, die einstückig mit dem Knauf (6) ist.

41. Sicherheitsverschluß nach einem der Ansprüche 25 bis 40, wobei die Sicherheitswand (66) aus einem thermisch isolierenden Material hergestellt ist, das eine interne Hülle bildet für die thermische Isolation des Handgriffs (62).

42. Sicherheitsverschluß nach einem der Ansprüche 25 bis 41, wobei der Handgriff (62) aus einem thermisch isolierenden Material hergestellt ist und eine externe Hülle zum thermischen Isolieren der Sicherheitswand (66) bildet.

43. Sicherheitsverschluß nach einem der Ansprüche 25 bis 42, der auch vertiefte Durchtritte (76'') in der Sicherheitswand (66) aufweist.

## Revendications

1. Bouchon de sécurité (1) pouvant être raccordé à un récipient pressurisable ayant un axe central défini (X-X), comprenant :
- un corps (2) fileté au niveau d'une première extrémité filetée (2') pouvant être raccordée audit récipient ;
- un bouton cannelé (6) pour visser ou dévisser le corps fileté (2) sur le récipient et pouvant être raccordé fonctionnellement audit corps fileté (2) ; et
- un corps d'engagement / dégagement (4) comportant des éléments d'engagement (32), le corps pouvant coulisser à l'intérieur dudit corps fileté (2) entre une position basse, dans laquelle lesdits éléments d'engagement s'engagent sur des éléments d'engagement correspondants (70) sur ledit bouton (6) et sur des éléments d'engagement correspondants (16) sur ledit corps fileté (2) de façon à accoupler le corps d'engagement / dégagement (4) en rotation avec le bouton (6) et le corps fileté (2), et une position haute, dans laquelle les éléments d'engagement (32) du corps d'engagement / dégagement (4) sont dégagés des éléments d'engagement correspondants (70) du bouton (6), ledit bouchon étant **caractérisé en ce que**, en position haute, lesdits éléments d'engagement (32) sont également dégagés des éléments d'engagement correspondants (16) dudit corps fileté (2).

2. Bouchon de sécurité selon la revendication 1, dans lequel ledit bouton cannelé (6) comprend un espace de coulissement (75) qui reçoit lesdits éléments d'engagement (32) du corps d'engagement / dégagement (4) dans sa position haute, de sorte qu'il n'y ait pas d'interférence en rotation entre lesdits éléments d'engagement (32) et les éléments d'engagement correspondants (70) du bouton (6).

3. Bouchon de sécurité selon la revendication 1 ou 2, dans lequel lesdits éléments d'engagement correspondants (70) du bouton cannelé (6) prennent la forme d'au moins un ergot (72) en saillie par rapport à une paroi de sécurité (66) dudit bouton (6) vers l'axe central (X-X) du bouchon (1).

4. Bouchon de sécurité selon la revendication 3, dans lequel ledit espace de coulissement (75) du bouton (6) est défini par ladite paroi de sécurité (66) et s'étend au-dessus dudit ergot (72) jusqu'à une extrémité pleine (67) dudit bouton.

5. Bouchon de sécurité selon l'une quelconque des revendications précédentes, dans lequel les éléments correspondants (32) du corps d'engagement / dégagement (4) comprennent au moins une saillie d'engagement (34) en saillie par rapport audit corps d'engagement / dégagement (4).

6. Bouchon de sécurité selon la revendication 5, dans lequel ladite saillie d'engagement (34) fait saillie de manière radiale par rapport audit corps d'engagement / dégagement (4).

7. Bouchon de sécurité selon l'une quelconque des revendications précédentes, dans lequel lesdits éléments d'engagement correspondants (16) du corps fileté (2) prennent la forme d'au moins une dent d'engagement (18) qui s'étend dans une direction essentiellement axiale en saillie par rapport à une extrémité supérieure (2'') dudit corps fileté (2).

8. Bouchon de sécurité selon la revendication 7, dans lequel ladite au moins une dent d'engagement (18) est une succession annulaire de dents d'engagement (18).

9. Bouchon de sécurité selon la revendication 8, dans lequel lesdites dents d'engagement (18) sont espacées angulairement par des encoches d'engagement (20).

10. Bouchon de sécurité selon les revendications 3 et 9, dans lequel ladite saillie d'engagement (34) du corps d'engagement / dégagement (4) est logée en partie, dans sa position basse, dans l'encoche d'engagement correspondante (20) du corps fileté (2) et fait saillie au-dessus des dents d'engagement (18) du corps fileté (2) de façon à interférer en rotation avec lesdits ergots (72) du bouton cannelé (6).

11. Bouchon de sécurité selon l'une quelconque des revendications précédentes, dans lequel le corps d'engagement / dégagement (4) est maintenu en position basse par des moyens de précharge résilients.

12. Bouchon de sécurité selon la revendication 11, dans lequel lesdits moyens de précharge comprennent un premier élément résilient préchargé entre ledit corps d'engagement / dégagement (4) et un élément d'arrêt plat.

13. Bouchon de sécurité selon la revendication 12, dans lequel ledit élément d'arrêt plat est un disque (80).

14. Bouchon de sécurité selon l'une quelconque des revendications précédentes, dans lequel le corps d'engagement / dégagement (4) comprend un espace de logement interne (38).

15. Bouchon de sécurité selon la revendication 14, dans lequel ledit espace de logement (38) reçoit un clapet de décharge (48).

16. Bouchon de sécurité selon la revendication 15, dans lequel ledit clapet de décharge (48) comprend un obturateur (50), un joint (52), un second élément résilient (54) et un écrou à oeil de précharge (56).

17. Bouchon de sécurité selon la revendication 16, dans lequel ledit écrou à oeil de précharge (56) comprend un trou de décharge traversant (60).

18. Bouchon de sécurité selon l'une des revendications 15 à 17, dans lequel ledit espace de logement (38) du corps d'engagement / dégagement (4) forme une partie d'un canal à travers lequel le fluide de travail est évacué lorsque le clapet de décharge (48) est ouvert.

19. Bouchon de sécurité selon l'une quelconque des revendications précédentes, dans lequel ledit corps d'engagement / dégagement (4) comprend des moyens pour arrêter la remontée dudit corps.

20. Bouchon de sécurité selon la revendication 19, dans lequel lesdits moyens d'arrêt comprennent un écrou d'arrêt (86) qui, lorsque le corps d'engagement /dégagement (4) est en position haute, rencontre une butée annulaire (12') sur le corps fileté (2).

21. Bouchon de sécurité selon la revendication 1 ou 2, dans lequel lesdits éléments d'engagement correspondants (70) du bouton cannelé (6) prennent la forme d'au moins une nervure de renforcement (104) qui s'étend d'une paroi de sécurité (66) du bouton (6) et fait saillie vers l'axe central (X-X) du bouchon (1), s'étendant de façon axiale en suivant le profil de ladite paroi de sécurité.

22. Bouchon de sécurité selon la revendication 21, dans lequel lesdites nervures de renforcement (104) du bouton (6) comprennent des interruptions dans leur continuité axiale (102).

23. Bouchon de sécurité selon la revendication 22, dans lequel ledit espace de coulissement (102) du bouton (6) est défini de manière circonférentielle par des parties axiales adjacentes desdites nervures de renforcement interrompues (104).

24. Bouchon de sécurité selon l'une quelconque des revendications précédentes, dans lequel ledit bouton cannelé comprend une poignée extérieure (62) destinée à être saisie pour permettre de visser ou dévisser ledit bouchon sur le récipient.

25. Bouchon de sécurité selon la revendication 24, dans lequel ledit bouton cannelé comprend également une paroi de sécurité (66) qui est au moins en partie interne à la poignée (62) et largement isolée thermiquement de cette dernière.

26. Bouchon de sécurité selon la revendication 24 ou 25, dans lequel ladite paroi de sécurité (66) est largement isolée thermiquement de la poignée (62) par un vide (68) entre ladite paroi de sécurité (66) et ladite poignée (62).

27. Bouchon de sécurité selon l'une des revendications 24 à 26, dans lequel ladite paroi de sécurité (66) et ladite poignée (62) se rejoignent au sommet.

28. Bouchon de sécurité selon la revendication 27, dans lequel ladite paroi de sécurité (66) et ladite poignée (62) se rejoignent au niveau d'une extrémité pleine (67).

29. Bouchon de sécurité selon l'une quelconque des revendications 24 à 28, dans lequel ladite poignée (62) comprend un chapeau (62').

30. Bouchon de sécurité selon la revendication 29, dans lequel ledit chapeau (62') est muni d'une pluralité de nervures externes (64).

31. Bouchon de sécurité selon la revendication 30, dans lequel lesdites nervures (64) réduisent la zone de contact entre l'utilisateur et la poignée (62).

32. Bouchon de sécurité selon la revendication 30 ou 31, dans lequel lesdites nervures (64) sont des nervures ayant une fonction antidérapante.

33. Bouchon de sécurité selon l'une quelconque des revendications 24 à 32, dans lequel ledit bouton comprend des moyens de raccordement pour raccorder le bouton au corps (2) du bouchon (1).

34. Bouchon de sécurité selon la revendication 33, dans lequel lesdits moyens de raccordement comprennent un espace annulaire (76) destiné à recevoir des éléments correspondants pour raccorder le corps (2) au bouton (6).

35. Bouchon de sécurité selon la revendication 34, dans lequel ledit espace annulaire (76) est défini par une succession circonférentielle d'éléments d'arrêt (76').

36. Bouchon de sécurité selon la revendication 35, dans lequel lesdits éléments d'arrêt (76') sont présents au nombre de quatre.

37. Bouchon de sécurité selon l'une des revendications 34 à 36, dans lequel lesdits éléments de raccordement correspondants comprennent un bord annulaire (22).

38. Bouchon de sécurité selon la revendication 37, dans lequel, lorsque le bouton (6) est raccordé au corps (2), les éléments d'arrêt (76') de l'espace annulaire (76) sont en contact avec le bord annulaire (22) du corps (2).

39. Bouchon de sécurité selon la revendication 38, dans lequel des moyens de précharge (78) maintiennent les éléments d'arrêt (76') de l'espace annulaire (76) en contact contre le bord annulaire (22) du corps (2).

40. Bouchon de sécurité selon la revendication 39, dans lequel lesdits moyens de précharge comprennent un premier élément résilient (48') agissant sur un disque (80) intégré au bouton (6).

41. Bouchon de sécurité selon l'une quelconque des revendications 25 à 40, dans lequel ladite paroi de sécurité (66) est constituée d'un matériau thermiquement isolant formant une gaine interne pour ladite poignée (62) afin de l'isoler thermiquement.

42. Bouchon de sécurité selon l'une quelconque des revendications 25 à 41, dans lequel ladite poignée (62) est constituée d'un matériau thermiquement isolant et forme une gaine externe pour ladite paroi de sécurité (66) afin de l'isoler thermiquement.

43. Bouchon de sécurité selon l'une quelconque des revendications 25 à 42, comprenant également des voies de passage évidées (76'') dans la paroi de sécurité (66).
